# EUROPEAN PATENT APPLICATION

(11) **EP 4 787 993 A1**
(43) Date of publication of application: **05.08.2026**
(21) Application number: 24878854.9
(22) Date of filing: 30.09.2024
(51) Int. Cl.: H04W 72/044

(54) **INFORMATION TRANSMISSION METHOD AND APPARATUS**

(30) Priority: 16.10.2023 CN 202311348112
(71) Applicant: HUAWEI TECHNOLOGIES CO., LTD., Shenzhen 518129 (CN)
(72) Inventor: XIA, Haitao, Shenzhen, Guangdong 518129 (CN); YU, Chao, Shenzhen, Guangdong 518129 (CN); YANG, Fan, Shenzhen, Guangdong 518129 (CN); YANG, Xu, Shenzhen, Guangdong 518129 (CN)
(74) Representative: Gill Jennings & Every LLP
(86) International application number: PCT/CN2024/122855
(87) International publication number: WO 2025/082210

(57) **Abstract**

An information transmission method and an apparatus are provided. In the information transmission method, a first device determines resource requirement information, where the resource requirement information indicates a requirement of the first device for a required BM resource, and the resource requirement information includes one or more of the following: a real-time performance requirement, a pooling requirement, a sharing requirement, a security requirement, and a mobility requirement. The first device sends the resource requirement information to a second device. The second device allocates, to a BM resource instance, a BM resource meeting the resource requirement information. It can be learned that the BM resource allocated by the second device to the BM resource instance meets the requirement of the first device for the BM resource. The requirement indicated by the resource requirement information may be a requirement of a telecommunication cloud application for a BM resource. In this way, the method facilitates the second device to deploy a BM resource instance that matches a differentiated requirement of the telecommunication cloud application for the BM resource.

## Description

This application claims priority to Chinese Patent Application No. 202311348112.1, filed with the China National Intellectual Property Administration on October 16, 2023 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and an apparatus.

### BACKGROUND

Cloud-native is a system implementation paradigm for building, running, and managing software in a cloud environment, and is an architecture practice that makes full use of cloud infrastructure and platform services, adapts to the cloud environment, and has key features such as (micro) servitization, elastic scalability, distribution, high availability, multi-tenancy, and automation.

In a cloud-native scenario in the telecommunication field, bare metal (bare metal, BM) resource instances may be deployed and lifecycle management (lifecycle management, LCM) may be performed on the BM resource instance to allocate BM resources to network elements. In this way, the network elements can use the allocated BM resources to execute telecommunication cloud applications. How to deploy the BM resource instance is a technical problem to be resolved.

### SUMMARY

Embodiments of this application provide an information transmission method and an apparatus, to deploy a BM resource instance that matches a differentiated requirement of a telecommunication cloud application for a BM resource.

According to a first aspect, this application provides an information transmission method. The method may be applied to a first device, may be applied to a chip in the first device, or may be applied to a logical module or software that can implement all or some functions of the first device. The following uses the first device as an example for description. The method includes: The first device determines resource requirement information, where the resource requirement information indicates a requirement for a required BM resource, and the resource requirement information includes one or more of the following: a real-time performance requirement, a pooling requirement, a sharing requirement, a security requirement, and a mobility requirement. The first device sends the resource requirement information to a second device, where the resource requirement information is used to allocate a BM resource to a BM resource instance.

It can be learned that, in the method, the first device sends the requirement for the required BM resource to the second device, so that the second device allocates a BM resource meeting the requirement of the first device to the BM resource instance. The requirement indicated by the resource requirement information may be a requirement of a telecommunication cloud application for a BM resource. The method facilitates the second device to deploy a BM resource instance that matches a differentiated requirement of the telecommunication cloud application for the BM resource.

In an optional implementation, the real-time performance requirement indicates whether the required BM resource needs to support a real-time application.

In an optional implementation, the pooling requirement indicates whether the required BM resource needs to be selected from a pooled resource.

In an optional implementation, the sharing requirement indicates that the required BM resource needs to be occupied by a specific tenant or needs to be shared by a plurality of tenants.

In an optional implementation, that the first device determines the resource requirement information includes: The first device receives requirement information of lifecycle management for a network service; and the first device determines the resource requirement information based on the requirement information of the lifecycle management for the network service. It can be learned that the first device converts a requirement of the lifecycle management for the network service into a requirement for the BM resource, so that the BM resource allocated by the second device to the BM resource instance meets a differentiated requirement of the network service for a resource.

In an optional implementation, the resource requirement information is carried in a first request message sent to the second device. The first request message further includes resource specification information, and the resource specification information indicates a resource specification requirement for the BM resource instance. This manner helps the BM resource instance determined by the second device meet the resource specification requirements of the first device for the BM resource instance in addition to meeting the resource requirement information.

In an optional implementation, the first request message is sent to the second device through a declarative application programming interface (application programming interface, API). The first request message further includes expected-state information, and the expected-state information indicates an expected state of the BM resource instance. Interoperations between the first device and the second device can be simplified through the declarative API, to reduce an error probability increased due to a plurality of interoperations, and reduce complexity of identifying and resolving a root cause of a fault related to the BM resource.

In an optional implementation, the first request message is sent to the second device through an imperative API. The first request message is used to request the second device to create the BM resource instance. The method further includes: The first device receives a response message from the second device through the imperative API, where the response message includes identification information of the BM resource instance created by the second device.

In an optional implementation, the first request message is sent to the second device through the imperative API. The first request message is used to request an operation performed by the second device for the BM resource instance. The method further includes: The first device receives the response message from the second device through the imperative API.

According to a second aspect, this application provides an information transmission method. The method may be applied to a second device, may be applied to a chip in the second device, or may be applied to a logical module or software that can implement all or some functions of the second device. The following uses the second device as an example for description. The method includes: The second device receives resource requirement information from a first device, where the resource requirement information indicates a requirement of the first device for a required BM resource, and the resource requirement information includes one or more of the following: a real-time performance requirement, a pooling requirement, a sharing requirement, a security requirement, and a mobility requirement. The second device allocates, to a BM resource instance, a BM resource meeting the resource requirement information.

It can be learned that the BM resource allocated by the second device to the BM resource instance meets the requirement of the first device for the BM resource. The requirement indicated by the resource requirement information may be a requirement of a telecommunication cloud application for a BM resource. In this way, the second device can deploy a BM resource instance that matches a differentiated requirement of the telecommunication cloud application for the BM resource.

In an optional implementation, the real-time performance requirement indicates whether the BM resource required by the first device needs to support a real-time application.

In an optional implementation, the pooling requirement indicates whether the BM resource required by the first device needs to be selected from a pooled resource.

In an optional implementation, the sharing requirement indicates that the BM resource required by the first device needs to be occupied by a specific tenant or needs to be shared by a plurality of tenants.

In an optional implementation, the resource requirement information is carried in a first request message received from the first device. The first request message further includes resource specification information, and the resource specification information indicates a resource specification requirement of the first device for the BM resource instance. That the second device allocates, to the BM resource instance, the BM resource meeting the resource requirement information includes: The second device allocates, to the BM resource instance, a BM resource meeting the resource requirement information and the resource specification information.

In an optional implementation, the first request message is received from the first device through a declarative API. The first request message further includes expected-state information, and the expected-state information indicates a state of the BM resource instance that is expected by the first device. A state of the BM resource instance to which the BM resource meeting the resource requirement information and the resource specification information is allocated is the expected state. Interoperations between the first device and the second device can be simplified through the declarative API, to reduce an error probability increased due to a plurality of interoperations, and reduce complexity of identifying and resolving a root cause of a fault related to the BM resource.

Optionally, that the second device allocates, to the BM resource instance, the BM resource meeting the resource requirement information and the resource specification information includes: The second device selects, for the BM resource instance, a template and a configuration file that match the resource requirement information and the resource specification information; and the second device determines, for the selected template and configuration file based on a difference between a current state and the expected state of the BM resource instance, to perform one or more of the following operations: adding a BM resource, reading a BM resource, updating a BM resource, and deleting a BM resource.

In an optional implementation, the first request message is received from the first device through an imperative API. The first request message is used to request to create the BM resource instance. That the second device allocates, to the BM resource instance, the BM resource meeting the resource requirement information and the resource specification information includes: The second device selects a template and a configuration file that match the resource requirement information and the resource specification information; and the second device creates, based on the selected template and configuration file, the BM resource instance to which the BM resource meeting the resource requirement information and the resource specification information is allocated. The method further includes: The second device sends a response message to the first device through the imperative API, where the response message includes identification information of the created BM resource instance.

In an optional implementation, the first request message is received from the first device through the imperative API. The first request message is used to request an operation for the BM resource instance. That the second device allocates, to the BM resource instance, the BM resource meeting the resource requirement information and the resource specification information includes: The second device selects the template and the configuration file that match the resource requirement information and the resource specification information; and the second device performs, for the BM resource instance based on the selected template and configuration file, the operation requested by using the first request message. The method further includes: The second device sends the response message to the first device through the imperative API.

According to a third aspect, this application provides an information transmission method. The method uses interaction between a first device and a second device as an example for description. The first device in the method may be replaced with a chip in the first device, or a logical module or software that can implement all or some functions of the first device. The second device in the method may be replaced with a chip in the second device, or a logical module or software that can implement all or some functions of the second device. The method includes: The first device determines resource requirement information, where the resource requirement information indicates a requirement of the first device for a required BM resource, and the resource requirement information includes one or more of the following: a real-time performance requirement, a pooling requirement, a sharing requirement, a security requirement, and a mobility requirement; and the first device sends the resource requirement information to the second device. The second device receives the resource requirement information from the first device; and the second device allocates, to a BM resource instance, a BM resource meeting the resource requirement information.

It can be learned that, in the method, the first device sends the requirement for the required BM resource to the second device, and the second device can allocate the BM resource meeting the requirement of the first device to the BM resource instance. The requirement indicated by the resource requirement information may be a requirement of a telecommunication cloud application for a BM resource. In this way, the second device can deploy a BM resource instance that matches a differentiated requirement of the telecommunication cloud application for the BM resource.

In an optional implementation, the real-time performance requirement indicates whether the BM resource required by the first device needs to support a real-time application.

In an optional implementation, the pooling requirement indicates whether the BM resource required by the first device needs to be selected from a pooled resource.

In an optional implementation, the sharing requirement indicates that the BM resource required by the first device needs to be occupied by a specific tenant or needs to be shared by a plurality of tenants.

In an optional implementation, that the first device determines the resource requirement information includes: The first device receives service requirement information; and the first device determines the resource requirement information based on the service requirement information.

In an optional implementation, the resource requirement information is carried in a first request message sent by the first device to the second device. The first request message further includes resource specification information, and the resource specification information indicates a resource specification requirement for the BM resource instance. That the second device allocates, to the BM resource instance, the BM resource meeting the resource requirement information includes: The second device allocates, to the BM resource instance, a BM resource meeting the resource requirement information and the resource specification information.

In an optional implementation, the first request message is sent by the first device to the second device through a declarative API. The first request message further includes expected-state information, and the expected-state information indicates an expected state of the BM resource instance. A state of the BM resource instance to which the BM resource meeting the resource requirement information and the resource specification information is allocated is the expected state.

Optionally, that the second device allocates, to the BM resource instance, the BM resource meeting the resource requirement information and the resource specification information includes: The second device selects, for the BM resource instance, a template and a configuration file that match the resource requirement information and the resource specification information; and the second device determines, for the selected template and configuration file based on a difference between a current state and the expected state of the BM resource instance, to perform one or more of the following operations: adding a BM resource, reading a BM resource, updating a BM resource, and deleting a BM resource.

In an optional implementation, the first request message is sent by the first device to the second device through an imperative API. The first request message is used to request the second device to create the BM resource instance. That the second device allocates, to the BM resource instance, the BM resource meeting the resource requirement information and the resource specification information includes: The second device selects a template and a configuration file that match the resource requirement information and the resource specification information; and the second device creates, based on the selected template and configuration file, the BM resource instance to which the BM resource meeting the resource requirement information and the resource specification information is allocated. The method further includes: The second device sends a response message to the first device through the imperative API, where the response message includes identification information of the created BM resource instance; and the first device receives the response message from the second device through the imperative API.

In an optional implementation, the first request message is sent to the second device through the imperative API. The first request message is used to request an operation performed by the second device for the BM resource instance. That the second device allocates, to the BM resource instance, the BM resource meeting the resource requirement information and the resource specification information includes: The second device selects the template and the configuration file that match the resource requirement information and the resource specification information; and the second device performs, for the BM resource instance based on the selected template and configuration file, the operation requested by using the first request message. The method further includes: The second device sends the response message to the first device through the imperative API; and the first device receives the response message from the second device through the imperative API.

In addition, for beneficial effects of the foregoing optional implementations in this aspect, refer to related content of the first aspect and the second aspect. Details are not described herein again.

According to a fourth aspect, this application further provides a communication apparatus. The communication apparatus may be a first device or a second device, may be a chip in the first device or a chip in the second device, or may be a logical module or software that can implement all or some functions of the first device or the second device. The communication apparatus has a function of implementing some or all of the implementations in the first aspect or the second aspect. The function may be implemented by hardware, or may be implemented by hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are essential for the communication apparatus. In addition, the processing unit may be configured to control the communication unit to perform data/signaling receiving and sending.

In an implementation, the processing unit is configured to determine resource requirement information, where the resource requirement information indicates a requirement for a required BM resource, and the resource requirement information includes one or more of the following: a real-time performance requirement, a pooling requirement, a sharing requirement, a security requirement, and a mobility requirement. The communication unit is configured to send the resource requirement information to the second device, where the resource requirement information is used to allocate a BM resource to a BM resource instance.

In addition, for another optional implementation of the communication apparatus in this aspect, refer to the related content of the first aspect. Details are not described herein again.

In another implementation, the communication unit is configured to receive resource requirement information from the first device, where the resource requirement information indicates a requirement of the first device for a required BM resource, and the resource requirement information includes one or more of the following: a real-time performance requirement, a pooling requirement, a sharing requirement, a security requirement, and a mobility requirement. The processing unit is configured to allocate, to a BM resource instance, a BM resource meeting the resource requirement information.

In addition, for another optional implementation of the communication apparatus in this aspect, refer to the related content of the second aspect. Details are not described herein again.

For example, the communication unit may be a transceiver or a communication interface, the storage unit may be a storage, and the processing unit may be a processor. The processor is coupled to the storage. The storage is configured to store a program or instructions. The processor may be configured to cause, when the program or instructions are executed by the processor, the communication apparatus to perform the method according to the first aspect or the second aspect. The transceiver or the communication interface may be configured to receive and send signals and/or data.

In an implementation, the processor is configured to determine resource requirement information, where the resource requirement information indicates a requirement for a required BM resource, and the resource requirement information includes one or more of the following: a real-time performance requirement, a pooling requirement, a sharing requirement, a security requirement, and a mobility requirement. The transceiver is configured to send the resource requirement information to the second device, where the resource requirement information is used to allocate a BM resource to a BM resource instance.

In addition, for another optional implementation of the communication apparatus in this aspect, refer to the related content of the first aspect. Details are not described herein again.

In another implementation, the transceiver is configured to receive resource requirement information from the first device, where the resource requirement information indicates a requirement of the first device for a required BM resource, and the resource requirement information includes one or more of the following: a real-time performance requirement, a pooling requirement, a sharing requirement, a security requirement, and a mobility requirement. The processor is configured to allocate, to a BM resource instance, a BM resource meeting the resource requirement information.

In addition, for another optional implementation of the communication apparatus in this aspect, refer to the related content of the second aspect. Details are not described herein again.

In another implementation, the communication apparatus is a chip or a chip system. The processing unit may alternatively be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing, and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of the integrated circuit technology, more components may be integrated on a same chip. For example, the digital baseband processor and a plurality of application processors (for example, but not limited to, a graphics processor and a multimedia processor) may be integrated on a same chip. The chip may be referred to as a system-on-a-chip (System-on-a-Chip, SoC). Whether the components are separately disposed on different chips or integrated and disposed on one or more chips usually depends on a requirement of a product design. Implementations of the foregoing components are not limited in embodiments of this application.

According to a fifth aspect, this application further provides a processor. The processor is configured to perform the foregoing methods. In a process of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the signal is output by the processor, other processing may further need to be performed on the signal before the signal reaches the transceiver (or the communication interface). Similarly, when the processor receives the input signal, the transceiver (or the communication interface) receives the signal, and inputs the signal into the processor. Further, after the transceiver (or the communication interface) receives the signal, other processing may further need to be performed on the signal before the signal is input to the processor.

Unless otherwise specified, operations such as sending and receiving related to the processor may be more generally understood as operations such as output, receiving, and input of the processor, instead of operations such as sending and receiving directly performed by a radio frequency circuit and an antenna, if the operations do not conflict with actual functions or internal logic of the operations in related descriptions.

In an implementation process, the processor may be a processor specially configured to perform these methods, or a processor, for example, a general-purpose processor, that executes computer instructions in a storage to perform these methods. The storage may be a non-transitory (non-transitory) storage, for example, a read-only memory (Read-Only Memory, ROM). The storage and the processor may be integrated on a same chip, or may be separately disposed on different chips. A type of the storage and a manner of disposing the storage and the processor are not limited in embodiments of this application.

According to a sixth aspect, this application further provides a communication system. The system includes the first device and the second device in the foregoing aspects. In another possible design, the system may further include another device that interacts with the first device and/or the second device in the solutions provided in this application.

According to a seventh aspect, this application provides a computer-readable storage medium. The computer-readable storage medium stores a computer program. When the computer program is run, the method according to the first aspect or the second aspect is performed.

According to an eighth aspect, this application further provides a computer program product including instructions. The computer program product includes a computer program code. When the computer program code is run, the method according to the first aspect or the second aspect is performed.

According to a ninth aspect, this application provides a chip system. The chip system includes a processor and an interface. The interface is configured to obtain a program or instructions, and the processor is configured to invoke the program or the instructions to implement a function related to the first aspect or the second aspect. In a possible design, the chip system further includes a storage. The storage is configured to store program instructions and data that are essential for a terminal. The chip system may include a chip, or may include a chip and another discrete component.

### BRIEF DESCRIPTION OF DRAWINGS

FIG. 1 is a diagram of a network function virtualization (network function virtualization, NFV) architecture;
FIG. 2 is a diagram of a structure of a communication system according to an embodiment of this application;
FIG. 3 is a diagram of a structure of another communication system according to an embodiment of this application;
FIG. 4 is a schematic flowchart of an information transmission method according to an embodiment of this application;
FIG. 5 is a diagram of another information transmission method according to an embodiment of this application;
FIG. 6 is a diagram of another information transmission method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following describes embodiments of this application with reference to the accompanying drawings in embodiments of this application.

First, to better understand an information transmission method disclosed in embodiments of this application, a communication system to which embodiments of this application are applicable is described.

The technical solutions in embodiments of this application may be applied to various communication systems, for example, a global system for mobile communications, a long term evolution (long term evolution, LTE) system, a universal mobile communication system, a 4th generation (4th generation, 4G) mobile communication technology system, a 4.5th generation (4.5th generation, 4.5G) mobile communication technology system, and a 5th generation (5th generation, 5G) mobile communication technology system. In addition, with continuous development of communication technologies, the technical solutions in embodiments of this application may be further applied to a subsequently evolved communication system, for example, a 6th generation (6th generation, 6G) mobile communication technology system, and a 7th generation (7th generation, 7G) mobile communication technology system.

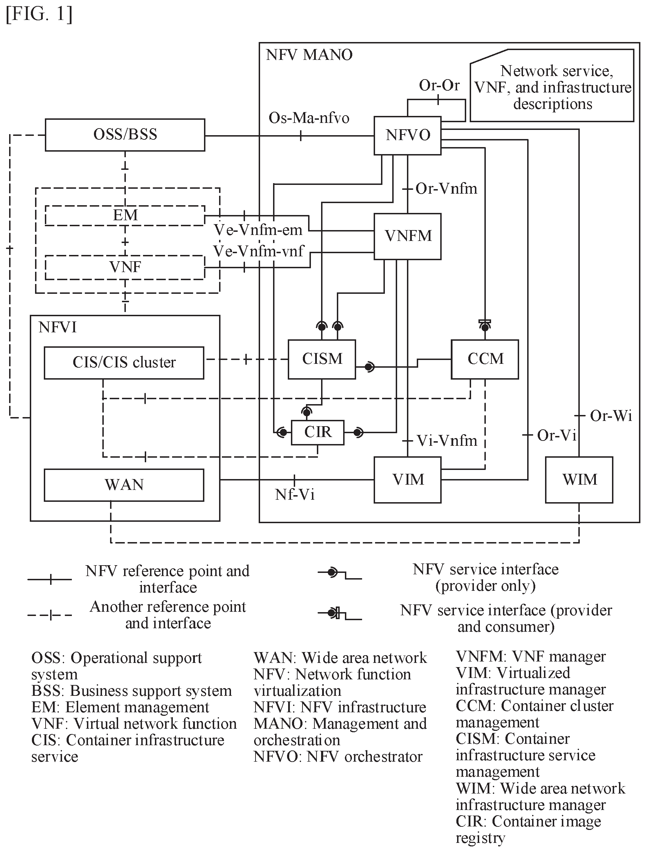

FIG. 1 is a diagram of an NFV architecture. The NFV architecture includes an operational support system (operational support system, OSS)/a business support system (business support system, BSS), element management (element management, EM), a virtual network function (virtual network function, VNF), an NFV infrastructure (NFV infrastructure, NFVI), and NFV management and orchestration (management and orchestration, MANO). The NFVI includes a hardware resource layer, a virtualization layer, and a virtual resource layer. Optionally, the NFVI may further include a container infrastructure service (container infrastructure service, CIS)/CIS cluster (that is, a CIS cluster), and a wide area network (wide area network, WAN).

The NFV MANO includes an NFV orchestrator (NFV orchestrator, NFVO), a VNF manager (VNF manager, VNFM), container infrastructure service management (container infrastructure service management, CISM), container cluster management (CIS cluster management, CCM), a container image registry (container image registry, CIR), a virtualized infrastructure manager (virtualized infrastructure manager, VIM), a wide area network infrastructure manager (WAN infrastructure manager, WIM), and network service, VNF, and infrastructure descriptions.

Primarily oriented to telecommunication service operators, the OSS/BSS is configured to provide an integrated network management and business operation function, including network management (for example, fault monitoring and network information collection), charging management, customer service management, and the like. The OSS/BSS and the NFVO communicate with each other through an Os-Ma-nfvo interface.

The EM is used to configure and manage functions of the VNF. The EM and the VNFM communicate with each other through a Ve-Vnfm-em interface.

The VNF is used to define a network function by using software, to be specific, implement various network functions by using software, for example, a virtual firewall function and a virtual switch function. Required resources of the VNF need to be divided into virtual computing/storage/network resources, and the resources are carried by the NFVI. The VNF and the VNFM communicate with each other through a Ve-Vnfm-vnf interface.

The NFVO may be used to implement a network service (network service, NS), or may execute a resource-related request from the VNFM, send configuration information to the VNFM, and collect state information of the VNF. The NFVO and the VNFM communicate with each other through an Or-Vnfm interface. In addition, the NFVO may further communicate with the VIM through an Or-Vi interface, to implement resource allocation or reservation, and exchange configurations and state information of virtualized hardware resources. The NFVO and the WIM communicate with each other through an Or-Wi interface.

The VNFM may manage one or more VNFs. The VNFM may perform various management functions, for example, instantiating, updating, querying, scaling, and terminating the VNFs. The VNFM and the VIM may communicate with each other through a Vi-Vnfm interface, to implement resource allocation, and exchange configurations of virtualized hardware resources.

The CISM is responsible for managing a container object invoked by a containerized VNF, including creating, updating, and deleting container objects, and scheduling, in a container cluster node resource pool managed by the CISM, the container objects to corresponding node resources (computing, storage, and network resources). A corresponding concept of the container object in a European Telecommunications Standards Institute (European Telecommunications Standards Institute, ETSI) standard is a managed container infrastructure object (managed container infrastructure object, MCIO).

The CCM is responsible for managing a container cluster, including creating a node resource pool used by the container cluster and performing node scaling. The container cluster is a set including a monitoring and management system and a series of computing nodes (such as a physical server, bare metal, or a virtual machine). The container cluster is a dynamic system, a plurality of containers may be deployed in the system, and states of these containers and communication between the containers may be monitored by the system. In the ETSI standard, a corresponding concept of the container cluster is a CIS cluster.

A primary function of the CIR is to handle operating system container image management.

The VIM may perform a function of resource management. For example, the VIM may be configured to manage allocation of infrastructure resources (for example, adding a resource to a virtual container), or may perform an operation function, for example, collecting NFVI fault information. The VIM and the NFVI communicate with each other through an Nf-Vi interface.

The WIM is a functional module that provides multi-site connectivity service (multi-site connectivity service, MSCS) management.

In one type of deployment, the NFV MANO further includes a physical infrastructure manager (physical infrastructure manager, PIM). In a process of network transformation evolving from NFV to cloud-native (Cloud-Native) in the telecommunication field, container management is introduced into the NFV MANO. For example, bare-metal container management requires creation of a container resource object on a BM resource of a physical server. In an NFV green energy saving scenario, a state and availability of hardware resources on the physical server need to be dynamically monitored, and it is determined, based on a workload status of network element applications running on the hardware resources, to dynamically allocate or release the hardware resources, to achieve energy saving. In these new scenarios, the NFV MANO adds a PIM function to an infrastructure layer. A function of a PIM northbound interface includes two parts. A first part is deploying a logical bare metal resource (bare machine) instance on the physical server, and performing LCM on the logical bare metal resource instance; and a second part is monitoring a physical infrastructure resource on the physical server, to perform fault, configuration, account, performance, security (fault, configuration, account, performance, security, FCAPS) management.

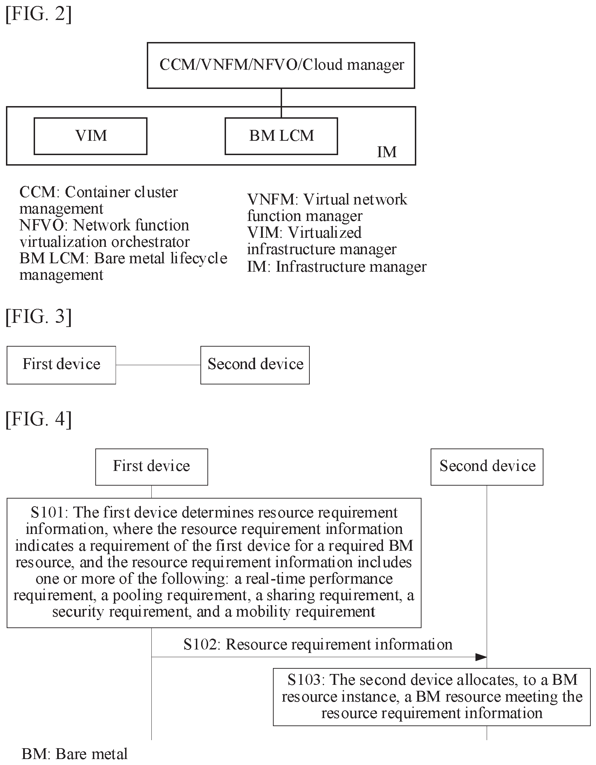

In addition, a BM LCM function may be further added to the NFV architecture shown in FIG. 1, and a module having the BM LCM function and the CCM/the VNFM/a cloud manager/the NFVO may communicate with each other. The BM LCM function may be integrated into the VIM. Alternatively, as shown in FIG. 2, the VIM may be upgraded to an infrastructure manager (infrastructure manager, IM), and the BM LCM function may be integrated into the IM. Alternatively, the BM LCM function may be integrated into a separately deployed PIM.

FIG. 3 is a diagram of a structure of another communication system according to an embodiment of this application. The communication system includes a first device and a second device, and the first device and the second device may communicate with each other. For example, the first device is a consumer of BM LCM (that is, a BM LCM consumer), and the second device is a provider of BM LCM (that is, a BM LCM producer). Specifically, the first device may be, for example, a CCM, a VNFM, a cloud manager, or an NFVO, the second device may be, for example, a module having a BM LCM function, and the second device may be, for example, a VIM/PIM having the BM LCM function. It may be understood that, when an NFV architecture changes, the first device and the second device shown in FIG. 3 may alternatively be implemented by nodes or entities that have corresponding functions in a new NFV architecture. In addition, a quantity and forms of devices shown in FIG. 3 are used as an example, and do not constitute a limitation on this embodiment of this application.

The following describes embodiments of this application in detail with reference to the accompanying drawings. In a schematic flowchart in this application, an example in which a first device and a second device are used as execution entities of illustrative interaction is used to illustrate a corresponding method. However, the execution entities of the illustrative interaction are not limited in this application. For example, the first device in the figure may alternatively be a chip, a chip system, or a processor that supports the first device in implementing a corresponding method, or may be a logical module or software that can implement all or some functions of the first device. The second device in the figure may alternatively be a chip, a chip system, or a processor that supports the second device in implementing a corresponding method, or may be a logical module or software that can implement all or some functions of the second device.

FIG. 4 is a schematic flowchart of an information transmission method according to an embodiment of this application. The information transmission method includes the following steps.

S101: A first device determines resource requirement information, where the resource requirement information indicates a requirement of the first device for a required BM resource, and the resource requirement information includes one or more of the following: a real-time performance requirement, a pooling requirement, a sharing requirement, a security requirement, and a mobility requirement.

For example, the requirement indicated by the resource requirement information may be a requirement of a telecommunication cloud application for a BM resource. Application workload carried by a telecommunication cloud is diversified and differentiated, for example, a real-time short video of an edge cloud application and an artificial intelligence (artificial intelligence, AI) high-computing power application of a central cloud. Different applications may have different requirements for a BM resource, and therefore, the resource requirement information determined by the first device may be different. The information transmission method provided in this embodiment of this application facilitates a second device to deploy a BM resource instance that matches a differentiated requirement of the telecommunication cloud application for the BM resource, so that a BM resource allocated by the second device to the BM resource instance meets the differentiated requirement of the telecommunication cloud application for the BM resource.

The following separately describes several requirements: the real-time performance requirement, the pooling requirement, the sharing requirement, the security requirement, and the mobility requirement, as described in the following optional implementation 1.1 to implementation 1.5.

Implementation 1.1: The real-time performance requirement indicates whether the BM resource required by the first device needs to support a real-time application or a deterministic application. The real-time application or the deterministic application may be, for example, an online game or an instant messaging. Optionally, the real-time performance requirement further indicates whether an operating system (operating system, OS) real-time performance configuration needs to be enabled for the BM resource required by the first device. The OS real-time performance configuration may include, for example, a configuration of real-time information of a kernel. Optionally, the real-time performance requirement further indicates whether the BM resource required by the first device needs to be configured by using dedicated hardware. Optionally, a data type of the real-time performance requirement included in the resource requirement information is a structured type.

In addition, in this embodiment of this application, "the BM resource supports xx application" may alternatively be understood as "the BM resource carries xx application". For example, whether the BM resource required by the first device needs to support the real-time application may alternatively be understood as whether the BM resource required by the first device needs to carry the real-time application. Details are not described again below.

In addition, in this embodiment of this application, "the xx requirement included in the resource requirement information indicates..." may be represented as "the resource requirement information includes an information element that indicates..., and an attribute of the information element is the xx requirement". For example, that the real-time performance requirement included in the resource requirement information indicates whether the BM resource required by the first device needs to support the real-time application may be represented as follows: The resource requirement information includes an information element that indicates whether the BM resource required by the first device needs to support the real-time application, and an attribute of the information element is the real-time performance requirement. Details are not described again below.

Implementation 1.2: The pooling requirement indicates whether the BM resource required by the first device needs to be selected from a pooled resource. Alternatively, this may be described as follows: The pooling requirement indicates whether the BM resource required by the first device needs to be created in the pooled resource. Optionally, a data type of the pooling requirement included in the resource requirement information is a Boolean type.

Implementation 1.3: The sharing requirement indicates that the BM resource required by the first device needs to be occupied by a specific tenant or needs to be shared by a plurality of tenants. The tenant may be, for example, an application program or a network function. Optionally, a data type of the sharing requirement included in the resource requirement information is a Boolean type.

Implementation 1.4: The security requirement indicates whether the BM resource required by the first device needs to support a security application. Optionally, when the security requirement indicates that the BM resource required by the first device needs to support the security application, the security requirement further indicates a security group and/or security rule information that need/needs to be used. Optionally, a data type of the security requirement included in the resource requirement information is a structured type.

Implementation 1.5: The mobility requirement indicates whether the BM resource required by the first device needs to support a mobility application. The mobility application may be, for example, an application executed by a vehicle-mounted base station. Optionally, the mobility requirement further indicates a maximum quantity of interruption periods allowed by the first device for reporting statistical information/alarm information caused by mobility. Optionally, the mobility requirement further indicates a quantity of pieces of statistical information/alarm information allowed to be reported at one time. Optionally, a data type of the mobility requirement included in the resource requirement information is a structured type.

In addition, in this embodiment of this application, for any one of the foregoing requirements, in addition to the foregoing content indicated by the requirement, the requirement may further indicate other content related to the requirement. This is not limited herein. For example, in addition to indicating whether the BM resource required by the first device needs to support the real-time application or the deterministic application, indicating whether the OS real-time configuration needs to be enabled for the BM resource required by the first device, and indicating whether the BM resource required by the first device needs to be configured by using the dedicated hardware, the real-time performance requirement may further indicate other content related to real-time performance. This is not limited. In addition, in addition to one or more of the real-time performance requirements, the pooling requirement, the sharing requirement, the security requirement, and the mobility requirement, the resource requirement information may further include a requirement in another aspect. This is not limited herein.

In an optional implementation, that the first device determines the resource requirement information includes: The first device receives requirement information of lifecycle management for a network service, and the first device determines the resource requirement information based on the requirement information of the lifecycle management for the network service. The requirement information of the lifecycle management for the network service may be, for example, sent by an OSS/a BSS to the first device. Optionally, the requirement information of the lifecycle management for the network service indicates one or more of the following: a workload type, a workload usage, a requirement of the network service for real-time performance and/or security and/or mobility, and the like carried in the network service. It may be understood that, when there is a created network service instance, the first device may convert a requirement of the lifecycle management for the network service into a requirement for the BM resource, so that the BM resource allocated by the second device to the BM resource instance meets a differentiated requirement of the network service for a resource.

In another optional implementation, the resource requirement information is determined by the first device when there is no created network service instance. It may be understood that, when there is no created network service instance, the first device determines the resource requirement information in advance, so that the second device allocates, to the BM resource instance in advance, a BM resource meeting the resource requirement information. In this case, when there is no created network service instance, the first device may directly select the BM resource from BM resources allocated in advance, to run the network service.

S102: The first device sends the resource requirement information to the second device. Correspondingly, the second device receives the resource requirement information from the first device.

In an optional implementation, the resource requirement information is carried in a first request message sent by the first device to the second device. The first request message further includes resource specification information, and the resource specification information indicates a resource specification requirement of the first device for the BM resource instance. A resource specification may alternatively be understood as a resource size. For example, a description template (BM flavor) of the BM resource is used to represent the resource specification information. The BM flavor includes information units of the following attributes: a flavor identifier (identifier, ID), a name (Name), CPUs, a memory (Memory), a root disc (Root disc), a peripheral disc (Ephemeral disc), and swap space (Swap). The information units of two attributes: the peripheral disc and the swap space, are optional (optional) information units in the BM flavor. For descriptions of the information units of these attributes, refer to Table 1 below.

**Table 1**

| Attribute | Description |
|---|---|
| Flavor ID | Unique identifier of the BM flavor |
| Name | Name of the BM flavor |
| CPUs | Quantity of physical CPUs used by the BM resource instance |
| Memory | Memory size used by the BM resource instance, in megabyte (MByte, MB) |
| Root disc | Size of the root disc used by the BM resource instance, in gigabyte (Gigabyte, GB) |
| Ephemeral disc | Size of the peripheral disc used by the BM resource instance, in GB |
| Swap | Swap space used by the BM resource instance, in MB |

In an optional manner, the first request message is sent by the first device to the second device through a declarative API. In this case, the first request message further includes expected-state information, and the expected-state information indicates a state of the BM resource instance that is expected by the first device. For example, the expected-state information specifically indicates that the state of the BM resource instance that is expected by the first device is an active (Active) state. In addition, the first request message may be, for example, a patch BM (PATCH BM) request message, and the first request message indicates the second device to patch the BM resource instance.

In another optional manner, the first request message is sent by the first device to the second device through an imperative API. In this case, the first request message is used to request an operation performed by the second device for the BM resource instance. Optionally, the first request message further includes some information related to the operation requested by using the first request message. For example, the first request message is used to request the second device to create the BM resource instance. The first request message further includes information related to this operation of creating the BM resource instance. For example, the first request message is a create BM request (Create BM Request) message. For another example, the first request message is used to request the second device to instantiate the BM resource. The first request message further includes information related to this operation of instantiating the BM resource.

S103: The second device allocates, to the BM resource instance, the BM resource meeting the resource requirement information.

The following describes specific content of step S103 for the real-time performance requirement, the pooling requirement, the sharing requirement, the security requirement, and the mobility requirement that are included in the resource requirement information, as described in the following optional implementation 2.1 to implementation 2.5.

Implementation 2.1: The second device determines, based on the real-time performance requirement, whether to allocate, to the BM resource instance, a BM resource that supports the real-time application or the deterministic application. It may be understood that, if the real-time performance requirement indicates that the BM resource required by the first device needs to support the real-time application, the second device allocates, to the BM resource instance, the BM resource that supports the real-time application.

Optionally, the method further includes: The second device selects, from physical resources within a scope of a data center (data center, DC) based on the real-time performance requirement, a BM resource of a computing resource type and a BM resource of a storage resource type that are allocated to the BM resource instance. The computing resource type is, for example, a CPU, a graphics processing unit (graphics processing unit, GPU), or a data processing unit (data processing unit, DPU).

Implementation 2.2: The second device allocates, based on the pooling requirement, the BM resource to the BM resource instance from a physical resource pool or an independent physical server. It may be understood that, if the pooling requirement indicates that the BM resource required by the first device needs to be selected from the pooled resource, the second device allocates the BM resource to the BM resource instance from the physical resource pool. If the pooling requirement indicates that the BM resource required by the first device does not need to be selected from the pooled resource, the second device allocates the BM resource to the BM resource instance from the independent physical server.

Implementation 2.3: The second device determines, based on the sharing requirement, a tenant isolation solution for the BM resource allocated to the BM resource instance. It may be understood that, if the sharing requirement indicates that the BM resource required by the first device needs to be occupied by the specific tenant, the second device allocates the BM resource occupied by the specific tenant to the BM resource instance. If the sharing requirement indicates that the BM resource required by the first device needs to be shared by the plurality of tenants, the second device allocates the BM resource shared by the plurality of tenants to the BM resource instance.

Optionally, the method may further include: The second device determines, based on the sharing requirement, tenants that can share the BM resource allocated by the second device to the BM resource instance, and/or determines tenants that cannot share the BM resource allocated by the second device to the BM resource instance.

Implementation 2.4: The second device determines, based on the security requirement, whether to allocate a BM resource that supports the security application to the BM resource instance. Optionally, if the security requirement indicates that the BM resource required by the first device needs to support the security application, the second device further determines a security group and/or security rule information used for the BM resource instance.

Implementation 2.5: The second device determines, based on the mobility requirement, whether to allocate a BM resource that supports the mobility application to the BM resource instance.

In an optional implementation, for a case in which the resource requirement information is carried in the first request message (where the first request message further includes the resource specification information) sent by the first device to the second device, that the second device allocates, to the BM resource instance, the BM resource meeting the resource requirement information includes: The second device allocates, to the BM resource instance, a BM resource meeting the resource requirement information and the resource specification information.

The following separately describes two cases in which the first device sends the first request message to the second device through the declarative API and the first device sends the first request message to the second device through the imperative API, as described in the following optional implementation 3.1 and implementation 3.2.

Implementation 3.1: The first device sends the first request message to the second device through the declarative API. In this case, a state of the BM resource instance to which the BM resource meeting the resource requirement information and the resource specification information is allocated in step S103 is the expected state indicated by the expected-state information in the first request message. In this case, when detecting that the state of the BM resource instance is the expected state, the first device determines that the second device has completed deployment of the BM resource instance. Further, the first device executes the telecommunication cloud application based on the deployed BM resource instance. For example, the expected state indicated by the expected-state information is an active (Active) state, and a current state of the BM resource instance is an inactive (Inactive) state. The second device allocates, to the BM resource instance, the BM resource meeting the resource requirement information and the resource specification information, so that the current state of the BM resource instance is transited from the inactive state to the active state.

It may be understood that, the first device sends the first request message through the declarative API, so that interoperations between the first device and the second device can be simplified, to reduce an error probability increased due to a plurality of interoperations, and reduce time costs of error correction in a rollback operation. This manner can further reduce complexity of identifying and resolving a root cause of a fault related to the BM resource.

Optionally, that the second device allocates, to the BM resource instance, the BM resource meeting the resource requirement information and the resource specification information includes: The second device selects, for the BM resource instance, a template and a configuration file that match the resource requirement information and the resource specification information. For example, if the resource requirement information indicates the real-time performance requirement, and the real-time performance requirement further indicates that the BM resource needs to be configured by using the dedicated hardware, the second device selects, for a to-be-allocated BM resource, a resource description template that supports hardware acceleration or AI acceleration. A description of a resource specification in the resource description template matches the resource specification information. If the resource requirement information indicates the pooling requirement, the second device selects, for the to-be-allocated BM resource, a resource description template in a BM resource pool. A description of a resource specification in the resource description template matches the resource specification information. After selecting the resource description template, the second device further searches for one or more resource configuration files matching the resource description template.

In addition, after the second device selects, for the BM resource instance, the template and the configuration file that match the resource requirement information and the resource specification information, the method further includes: The second device determines, for the selected template and configuration file based on a difference between the current state of the BM resource instance and the state of the BM resource instance that is expected by the first device, to perform one or more of the following operations: adding a BM resource, reading a BM resource, updating a BM resource, and deleting a BM resource. In this way, the BM resource meeting the resource requirement information and the resource specification information is allocated to the BM resource instance, so that the BM resource instance is transited from the current state to the expected state. For example, if the current state of the BM resource instance is the inactive state, and the expected state indicated by the expected-state information in the first request message received by the second device is the active state, the second device determines to perform the operation of adding a BM resource, and allocates, to the BM resource instance based on the selected template and configuration file, the BM resource meeting the resource requirement information and the resource specification information.

Implementation 3.2: The first device sends the first request message to the second device through the imperative API. In this case, that the second device allocates, to the BM resource instance, the BM resource meeting the resource requirement information and the resource specification information includes: The second device selects the template and the configuration file that match the resource requirement information and the resource specification information; and the second device performs, for the BM resource instance based on the selected template and configuration file, the operation requested by using the first request message. In this way, the BM resource meeting the resource requirement information and the resource specification information is allocated to the BM resource instance. The method further includes: The second device sends a response message to the first device through the imperative API; and correspondingly, the first device receives the response message from the second device through the imperative API. It may be understood that the response message is sent by the second device in response to the first request message.

For example, an example in which the first request message is used to request the second device to create the BM resource instance is used. That the second device allocates, to the BM resource instance, the BM resource meeting the resource requirement information and the resource specification information includes: The second device selects the template and the configuration file that match the resource requirement information and the resource specification information; and the second device creates, based on the selected template and configuration file, the BM resource instance to which the BM resource meeting the resource requirement information and the resource specification information is allocated. The method further includes: The second device sends the response message to the first device through the imperative API, where the response message includes identification information of the BM resource instance created by the second device; and correspondingly, the first device receives the response message from the second device through the imperative API. In this case, the first device may determine, based on the identification information in the response message, the BM resource instance created by the second device, and further, the first device executes the telecommunication cloud application based on the created BM resource instance.

In conclusion, in the information transmission method, the first device determines the resource requirement information, where the resource requirement information indicates the requirement of the first device for the required BM resource, and the resource requirement information includes one or more of the following: the real-time performance requirement, the pooling requirement, the sharing requirement, the security requirement, and the mobility requirement. The first device sends the resource requirement information to the second device. The second device allocates, to the BM resource instance, the BM resource meeting the resource requirement information. It can be learned that the BM resource allocated by the second device to the BM resource instance meets the requirement of the first device for the BM resource. The requirement indicated by the resource requirement information may be the requirement of the telecommunication cloud application for the BM resource. The method facilitates the second device to deploy the BM resource instance that matches the differentiated requirement of the telecommunication cloud application for the BM resource, so that the BM resource allocated by the second device to the BM resource instance meets the differentiated requirement of the telecommunication cloud application for the BM resource.

An information transmission method in which transmission of a first request message is performed through a declarative API and an information transmission method in which transmission of a first request message is performed through an imperative API are further respectively described in embodiments of this application by using examples.

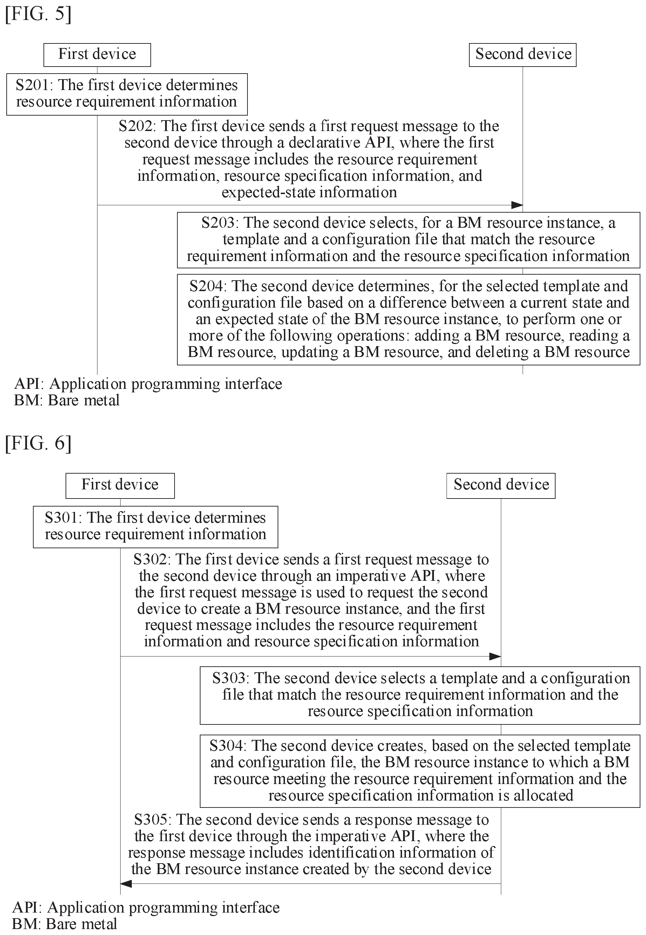

Example 1: Transmission of the first request message is performed through the declarative API. The example of the information transmission method is shown in FIG. 5, and includes the following steps.

S201: A first device determines resource requirement information, where the resource requirement information indicates a requirement of the first device for a required BM resource, and the resource requirement information includes one or more of the following: a real-time performance requirement, a pooling requirement, a sharing requirement, a security requirement, and a mobility requirement.

S202: The first device sends the first request message to a second device through the declarative API, where the first request message includes the resource requirement information, resource specification information, and expected-state information. The resource specification information indicates a resource specification requirement of the first device for a BM resource instance, and the expected-state information indicates a state of the BM resource instance that is expected by the first device. Correspondingly, the second device receives the first request message from the first device through the declarative API.

S203: The second device selects, for the BM resource instance, a template and a configuration file that match the resource requirement information and the resource specification information.

S204: The second device determines, for the selected template and configuration file based on a difference between a current state and the expected state of the BM resource instance, to perform one or more of the following operations: adding a BM resource, reading a BM resource, updating a BM resource, and deleting a BM resource.

For specific descriptions of step S201 to step S204, refer to related descriptions in the information transmission method shown in FIG. 4, and the steps also have corresponding beneficial effects. Details are not described again.

Example 2: Transmission of the first request message is performed through the imperative API. An example in which the first request message is used to request a second device to create a BM resource instance is used. The example of the information transmission method is shown in FIG. 6, and includes the following steps.

S301: A first device determines resource requirement information, where the resource requirement information indicates a requirement of the first device for a required BM resource, and the resource requirement information includes one or more of the following: a real-time performance requirement, a pooling requirement, a sharing requirement, a security requirement, and a mobility requirement.

S302: The first device sends the first request message to the second device through the imperative API, where the first request message is used to request the second device to create the BM resource instance, and the first request message includes the resource requirement information and resource specification information. The resource specification information indicates a resource specification requirement of the first device for the BM resource instance. Correspondingly, the second device receives the first request message from the first device through the declarative API.

S303: The second device selects a template and a configuration file that match the resource requirement information and the resource specification information.

S304: The second device creates, based on the selected template and configuration file, the BM resource instance to which a BM resource meeting the resource requirement information and the resource specification information is allocated.

S305: The second device sends a response message to the first device through the imperative API, where the response message includes identification information of the BM resource instance created by the second device; and correspondingly, the first device receives the response message from the second device through the imperative API.

For specific descriptions of step S301 to step S305, refer to related descriptions in the information transmission method shown in FIG. 4, and the steps also have corresponding beneficial effects. Details are not described again.

To implement functions in the foregoing methods provided in embodiments of this application, the first device or the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

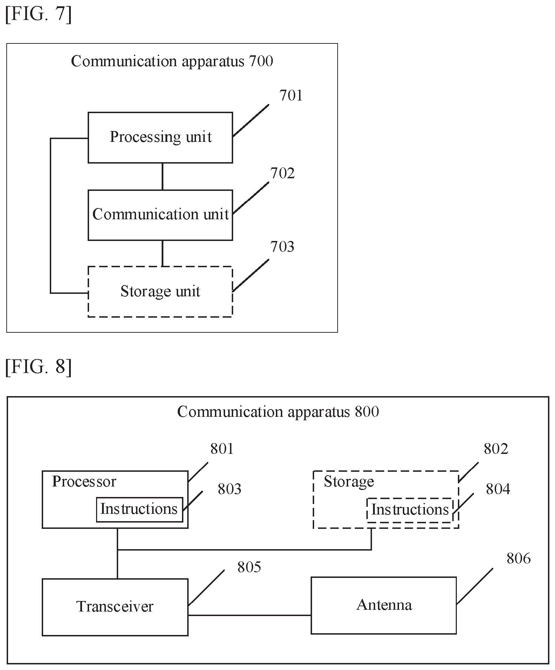

As shown in FIG. 7, an embodiment of this application provides a communication apparatus 700. The communication apparatus 700 may be a first device or a second device, may be a component (for example, an integrated circuit or a chip) of the first device, or may be a component (for example, an integrated circuit or a chip) of the second device. The communication apparatus 700 may alternatively be another communication unit, configured to implement the method in method embodiments of this application. The communication apparatus 700 may include a processing unit 701. Optionally, the communication apparatus 700 may further include a communication unit 702. The processing unit 701 is configured to control the communication unit 702 to receive and send data/signaling. The communication unit 702 may also be referred to as a transceiver unit. Optionally, the communication unit 702 may include a sending unit and a receiving unit. The sending unit may be configured to send data/signaling, and the receiving unit may be configured to receive data/signaling. Optionally, the communication apparatus 700 may further include a storage unit 703. The storage unit 703 may be configured to store information and/or data and/or instructions, and the like. The storage unit 703 may interact with the processing unit 701, or may interact with the communication unit 702.

In a possible design, for a case in which the communication apparatus 700 is configured to implement a function of the first device in the foregoing method embodiments,
the processing unit 701 is configured to determine resource requirement information, where the resource requirement information indicates a requirement for a required BM resource, and the resource requirement information includes one or more of the following: a real-time performance requirement, a pooling requirement, a sharing requirement, a security requirement, and a mobility requirement; and
the communication unit 702 is configured to send the resource requirement information to the second device, where the resource requirement information is used to allocate a BM resource to a BM resource instance.

In an optional implementation, the real-time performance requirement indicates whether the required BM resource needs to support a real-time application.

In an optional implementation, the pooling requirement indicates whether the required BM resource needs to be selected from a pooled resource.

In an optional implementation, the sharing requirement indicates that the required BM resource needs to be occupied by a specific tenant or needs to be shared by a plurality of tenants.

In an optional implementation, the communication unit 702 is further configured to receive requirement information of lifecycle management for a network service. The processing unit 701 determines the resource requirement information, and is specifically configured to determine the resource requirement information based on the requirement information of the lifecycle management for the network service.

In an optional implementation, the resource requirement information is carried in a first request message sent to the second device. The first request message further includes resource specification information, and the resource specification information indicates a resource specification requirement for the BM resource instance.

In an optional implementation, the first request message is sent to the second device through a declarative API. The first request message further includes expected-state information, and the expected-state information indicates an expected state of the BM resource instance.

In an optional implementation, the first request message is sent to the second device through an imperative API. The first request message is used to request the second device to create the BM resource instance. The communication unit 702 is further configured to receive a response message from the second device through the imperative API, where the response message includes identification information of the BM resource instance created by the second device.

In an optional implementation, the first request message is sent to the second device through the imperative API. The first request message is used to request an operation performed by the second device for the BM resource instance. The communication unit 702 is further configured to receive the response message from the second device through the imperative API.

In another possible design, for a case in which the communication apparatus 700 is configured to implement a function of the second device in the foregoing method embodiments,
the communication unit 702 is configured to receive resource requirement information from the first device, where the resource requirement information indicates a requirement of the first device for a required BM resource, and the resource requirement information includes one or more of the following: a real-time performance requirement, a pooling requirement, a sharing requirement, a security requirement, and a mobility requirement; and
the processing unit 701 is configured to allocate, to a BM resource instance, a BM resource meeting the resource requirement information.

In an optional implementation, the real-time performance requirement indicates whether the BM resource required by the first device needs to support a real-time application.

In an optional implementation, the pooling requirement indicates whether the BM resource required by the first device needs to be selected from a pooled resource.

In an optional implementation, the sharing requirement indicates that the BM resource required by the first device needs to be occupied by a specific tenant or needs to be shared by a plurality of tenants.

In an optional implementation, the resource requirement information is carried in a first request message received from the first device. The first request message further includes resource specification information, and the resource specification information indicates a resource specification requirement of the first device for the BM resource instance. The processing unit 701 allocates, to the BM resource instance, the BM resource meeting the resource requirement information, and is specifically configured to allocate, to the BM resource instance, a BM resource meeting the resource requirement information and the resource specification information.

In an optional implementation, the first request message is received from the first device through a declarative API. The first request message further includes expected-state information, and the expected-state information indicates a state of the BM resource instance that is expected by the first device. A state of the BM resource instance to which the BM resource meeting the resource requirement information and the resource specification information is allocated is the expected state.

Optionally, the processing unit 701 allocates, to the BM resource instance, the BM resource meeting the resource requirement information and the resource specification information, and is specifically configured to: select, for the BM resource instance, a template and a configuration file that match the resource requirement information and the resource specification information; and determine, for the selected template and configuration file based on a difference between a current state and the expected state of the BM resource instance, to perform one or more of the following operations: adding a BM resource, reading a BM resource, updating a BM resource, and deleting a BM resource.

In an optional implementation, the first request message is received from the first device through an imperative API. The first request message is used to request to create the BM resource instance. The processing unit 701 allocates, to the BM resource instance, the BM resource meeting the resource requirement information and the resource specification information, and is specifically configured to: select the template and the configuration file that match the resource requirement information and the resource specification information; and create, based on the selected template and configuration file, the BM resource instance to which the BM resource meeting the resource requirement information and the resource specification information is allocated. The communication unit 702 is further configured to send a response message to the first device through the imperative API, where the response message includes identification information of the created BM resource instance.

In an optional implementation, the first request message is received from the first device through the imperative API. The first request message is used to request an operation for the BM resource instance. The processing unit 701 allocates, to the BM resource instance, the BM resource meeting the resource requirement information and the resource specification information, and is specifically configured to: select the template and the configuration file that match the resource requirement information and the resource specification information; and perform, for the BM resource instance based on the selected template and configuration file, the operation requested by using the first request message. The communication unit 702 is further configured to send the response message to the first device through the imperative API.

This embodiment of this application and the foregoing method embodiments are based on a same concept, and bring a same technical effect. For a specific principle, refer to the descriptions in the foregoing embodiments. Details are not described again.

An embodiment of this application further provides a communication apparatus 800, as shown in FIG. 8. The communication apparatus 800 may be a first device or a second device, may be a chip, a chip system, a processor, or the like that supports the first device in implementing the foregoing methods, or may be a chip, a chip system, a processor, or the like that supports the second device in implementing the foregoing methods. The apparatus may be configured to implement the method described in the foregoing method embodiments. For details, refer to the descriptions in the foregoing method embodiments.

The communication apparatus 800 may include one or more processors 801. The processor 801 may be configured to implement some or all functions of the first device or the second device by using a logic circuit or by running a computer program. The processor 801 may be a general-purpose processor, a dedicated processor, or the like. For example, the processor 801 may be a baseband processor, a digital signal processor, an application-specific integrated circuit, a field programmable gate array or another programmable logic device, a discrete gate or a transistor logic device, or a discrete hardware component or a CPU. The baseband processor may be configured to process a communication protocol and communication data. The central processing unit may be configured to control the communication apparatus, execute a software program, and process data of the software program. The communication apparatus is, for example, a base station, a baseband chip, a terminal, a terminal chip, a distributed unit (distributed unit, DU), or a central unit (central unit, CU).

Optionally, the communication apparatus 800 may include one or more storages 802. The storage 802 may store instructions 804. The instructions may be run on the processor 801, to cause the communication apparatus 800 to perform the method described in the foregoing method embodiments. Optionally, the storage 802 may further store data. The processor 801 and the storage 802 may be separately disposed, or may be integrated together.

The storage 802 may include but is not limited to a non-volatile storage, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 800 may further include a transceiver 805 and an antenna 806. The transceiver 805 may be referred to as a transceiver unit, a transceiver machine, a transceiver circuit, or the like, and is configured to implement a transceiver function. The transceiver 805 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

In a possible design, for a case in which the communication apparatus 800 is configured to implement the function of the first device in the foregoing method embodiments,
the processor 801 is configured to determine resource requirement information, where the resource requirement information indicates a requirement for a required BM resource, and the resource requirement information includes one or more of the following: a real-time performance requirement, a pooling requirement, a sharing requirement, a security requirement, and a mobility requirement; and
the transceiver 805 is configured to send the resource requirement information to the second device, where the resource requirement information is used to allocate a BM resource to a BM resource instance.

In an optional implementation, the real-time performance requirement indicates whether the required BM resource needs to support a real-time application.

In an optional implementation, the pooling requirement indicates whether the required BM resource needs to be selected from a pooled resource.

In an optional implementation, the sharing requirement indicates that the required BM resource needs to be occupied by a specific tenant or needs to be shared by a plurality of tenants.

In an optional implementation, the transceiver 805 is further configured to receive requirement information of lifecycle management for a network service. The processor 801 determines the resource requirement information, and is specifically configured to determine the resource requirement information based on the requirement information of the lifecycle management for the network service.

In an optional implementation, the resource requirement information is carried in a first request message sent to the second device. The first request message further includes resource specification information, and the resource specification information indicates a resource specification requirement for the BM resource instance.

In an optional implementation, the first request message is sent to the second device through a declarative API. The first request message further includes expected-state information, and the expected-state information indicates an expected state of the BM resource instance.

In an optional implementation, the first request message is sent to the second device through an imperative API. The first request message is used to request the second device to create the BM resource instance. The transceiver 805 is further configured to receive a response message from the second device through the imperative API, where the response message includes identification information of the BM resource instance created by the second device.

In an optional implementation, the first request message is sent to the second device through the imperative API. The first request message is used to request an operation performed by the second device for the BM resource instance. The transceiver 805 is further configured to receive the response message from the second device through the imperative API.

In another possible design, for a case in which the communication apparatus 800 is configured to implement a function of the second device in the foregoing method embodiments,
the transceiver 805 is configured to receive resource requirement information from the first device, where the resource requirement information indicates a requirement of the first device for a required BM resource, and the resource requirement information includes one or more of the following: a real-time performance requirement, a pooling requirement, a sharing requirement, a security requirement, and a mobility requirement; and
the processor 801 is configured to allocate, to a BM resource instance, a BM resource meeting the resource requirement information.

In an optional implementation, the real-time performance requirement indicates whether the BM resource required by the first device needs to support a real-time application.

In an optional implementation, the pooling requirement indicates whether the BM resource required by the first device needs to be selected from a pooled resource.

In an optional implementation, the sharing requirement indicates that the BM resource required by the first device needs to be occupied by a specific tenant or needs to be shared by a plurality of tenants.

In an optional implementation, the resource requirement information is carried in a first request message received from the first device. The first request message further includes resource specification information, and the resource specification information indicates a resource specification requirement of the first device for the BM resource instance. The processor 801 allocates, to the BM resource instance, the BM resource meeting the resource requirement information, and is specifically configured to allocate, to the BM resource instance, a BM resource meeting the resource requirement information and the resource specification information.

In an optional implementation, the first request message is received from the first device through a declarative API. The first request message further includes expected-state information, and the expected-state information indicates a state of the BM resource instance that is expected by the first device. A state of the BM resource instance to which the BM resource meeting the resource requirement information and the resource specification information is allocated is the expected state.

Optionally, the processor 801 allocates, to the BM resource instance, the BM resource meeting the resource requirement information and the resource specification information, and is specifically configured to: select, for the BM resource instance, a template and a configuration file that match the resource requirement information and the resource specification information; and determine, for the selected template and configuration file based on a difference between a current state and the expected state of the BM resource instance, to perform one or more of the following operations: adding a BM resource, reading a BM resource, updating a BM resource, and deleting a BM resource.

In an optional implementation, the first request message is received from the first device through an imperative API. The first request message is used to request to create the BM resource instance. The processor 801 allocates, to the BM resource instance, the BM resource meeting the resource requirement information and the resource specification information, and is specifically configured to: select the template and the configuration file that match the resource requirement information and the resource specification information; and create, based on the selected template and configuration file, the BM resource instance to which the BM resource meeting the resource requirement information and the resource specification information is allocated. The transceiver 805 is further configured to send a response message to the first device through the imperative API, where the response message includes identification information of the created BM resource instance.

In an optional implementation, the first request message is received from the first device through the imperative API. The first request message is used to request an operation for the BM resource instance. The processor 801 allocates, to the BM resource instance, the BM resource meeting the resource requirement information and the resource specification information, and is specifically configured to: select the template and the configuration file that match the resource requirement information and the resource specification information; and perform, for the BM resource instance based on the selected template and configuration file, the operation requested by using the first request message. The transceiver 805 is further configured to send the response message to the first device through the imperative API.

In another possible design, the processor 801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured for transmission or transfer of a signal.

In still another possible design, optionally, the processor 801 may store instructions 803. When the instructions 803 are run on the processor 801, the communication apparatus 800 may be caused to perform the method described in the foregoing method embodiments. The instructions 803 may be fixed in the processor 801. In this case, the processor 801 may be implemented by hardware.

In still another possible design, the communication apparatus 800 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic blocks) and steps (steps) that are listed in embodiments of this application may be implemented by using electronic hardware, computer software, or a combination of the electronic hardware and the computer software. Whether the functions are implemented by using the hardware or the software depends on particular applications and a design requirement of the entire system. A person skilled in the art may use various methods to implement the described functions for each particular application, but it should not be considered that the implementation goes outside the scope of embodiments of this application.

This embodiment of this application and the foregoing method embodiments are based on a same concept, and bring a same technical effect. For a specific principle, refer to the descriptions in the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
determining resource requirement information, wherein the resource requirement information indicates a requirement for a required bare metal BM resource, and the resource requirement information comprises one or more of the following: a real-time performance requirement, a pooling requirement, a sharing requirement, a security requirement, and a mobility requirement; and
sending the resource requirement information to a second device, wherein the resource requirement information is used to allocate a BM resource to a BM resource instance.

2. The method according to claim 1, wherein
the real-time performance requirement indicates whether the required BM resource needs to support a real-time application.

3. The method according to claim 1 or 2, wherein
the pooling requirement indicates whether the required BM resource needs to be selected from a pooled resource.

4. The method according to any one of claims 1 to 3, wherein
the sharing requirement indicates that the required BM resource needs to be occupied by a specific tenant or needs to be shared by a plurality of tenants.

5. The method according to any one of claims 1 to 4, wherein
the resource requirement information is carried in a first request message sent to the second device; and
the first request message further comprises resource specification information, and the resource specification information indicates a resource specification requirement for the BM resource instance.

6. The method according to claim 5, wherein the first request message is sent to the second device through a declarative application programming interface API; and the first request message further comprises expected-state information, and the expected-state information indicates an expected state of the BM resource instance.

7. The method according to claim 5, wherein the first request message is sent to the
second device through an imperative API;
the first request message is used to request the second device to create the BM resource instance; and
the method further comprises: receiving a response message from the second device through the imperative API, wherein the response message comprises identification information of the BM resource instance created by the second device.

8. The method according to claim 5 or 7, wherein the first request message is sent to
the second device through the imperative API;
the first request message is used to request an operation performed by the second device for the BM resource instance; and
the method further comprises: receiving the response message from the second device through the imperative API.

9. An information transmission method, wherein the method comprises:
receiving resource requirement information from a first device, wherein the resource requirement information indicates a requirement of the first device for a required bare metal BM resource, and the resource requirement information comprises one or more of the following: a real-time performance requirement, a pooling requirement, a sharing requirement, a security requirement, and a mobility requirement; and
allocating, to a BM resource instance, a BM resource meeting the resource requirement information.

10. The method according to claim 9, wherein
the real-time performance requirement indicates whether the BM resource required by the first device needs to support a real-time application.

11. The method according to claim 9 or 10, wherein
the pooling requirement indicates whether the BM resource required by the first device needs to be selected from a pooled resource.

12. The method according to any one of claims 9 to 11, wherein
the sharing requirement indicates whether the BM resource required by the first device needs to be occupied by a specific tenant or needs to be shared by a plurality of tenants.

13. The method according to any one of claims 9 to 12, wherein
the resource requirement information is carried in a first request message received from the first device;
the first request message further comprises resource specification information, and the resource specification information indicates a resource specification requirement of the first device for the BM resource instance; and
the allocating, to the BM resource instance, the BM resource meeting the resource requirement information comprises: allocating, to the BM resource instance, a BM resource meeting the resource requirement information and the resource specification information.

14. The method according to claim 13, wherein the first request message is received from the first device through a declarative application programming interface API; the first request message further comprises expected-state information, and the expected-state information indicates a state of the BM resource instance that is expected by the first device; and
a state of the BM resource instance to which the BM resource meeting the resource requirement information and the resource specification information is allocated is the expected state.

15. The method according to claim 14, wherein the allocating, to the BM resource instance, the BM resource meeting the resource requirement information and the resource specification information comprises:
selecting, for the BM resource instance, a template and a configuration file that match the resource requirement information and the resource specification information; and
determining, for the selected template and configuration file based on a difference between a current state and the expected state of the BM resource instance, to perform one or more of the following operations: adding a BM resource, reading a BM resource, updating a BM resource, and deleting a BM resource.

16. The method according to claim 13, wherein the first request message is received
from the first device through an imperative API;
the first request message is used to request to create the BM resource instance; the allocating, to the BM resource instance, the BM resource meeting the resource requirement information and the resource specification information comprises: selecting a template and a configuration file that match the resource requirement information and the resource specification information; and creating, based on the selected template and configuration file, the BM resource instance to which the BM resource meeting the resource requirement information and the resource specification information is allocated; and
the method further comprises: sending a response message to the first device through the imperative API, wherein the response message comprises identification information of the created BM resource instance.

17. The method according to claim 13 or 16, wherein the first request message is
received from the first device through the imperative API;
the first request message is used to request an operation for the BM resource instance;
the allocating, to the BM resource instance, the BM resource meeting the resource requirement information and the resource specification information comprises: selecting the template and the configuration file that match the resource requirement information and the resource specification information; and performing, for the BM resource instance based on the selected template and configuration file, the operation requested by using the first request message; and
the method further comprises: sending the response message to the first device through the imperative API.

18. An information transmission method, wherein the method comprises:
determining, by a first device, resource requirement information, wherein the resource requirement information indicates a requirement of the first device for a required bare metal BM resource, and the resource requirement information comprises one or more of the following: a real-time performance requirement, a pooling requirement, a sharing requirement, a security requirement, and a mobility requirement;
sending, by the first device, the resource requirement information to a second device;
receiving, by the second device, the resource requirement information from the first device; and
allocating, by the second device, to a BM resource instance, a BM resource meeting the resource requirement information.

19. A communication system, wherein the communication system comprises a first
device and a second device;
the first device is configured to determine resource requirement information, wherein the resource requirement information indicates a requirement of the first device for a required bare metal BM resource, and the resource requirement information comprises one or more of the following: a real-time performance requirement, a pooling requirement, a sharing requirement, a security requirement, and a mobility requirement;
the first device is further configured to send the resource requirement information to the second device;
the second device is configured to receive the resource requirement information from the first device; and
the second device is further configured to allocate, to a BM resource instance, a BM resource meeting the resource requirement information.

20. A communication apparatus, wherein the apparatus comprises a module or a unit configured to implement the method according to any one of claims 1 to 9, or the apparatus comprises a module or a unit configured to implement the method according to any one of claims 10 to 18.

21. A communication apparatus, comprising a processor, wherein
the processor is configured to execute a computer program or instructions in a storage, to cause the communication apparatus to perform the method according to any one of claims 1 to 9, or cause the communication apparatus to perform the method according to any one of claims 10 to 18.

22. A computer-readable storage medium, wherein the computer-readable storage medium stores a computer program, and when the computer program is run, the method according to any one of claims 1 to 9 is implemented, or the method according to any one of claims 10 to 18 is implemented.

23. A computer program product, wherein the computer program product comprises a computer program code, and when the computer program code is run, the method according to any one of claims 1 to 9 is implemented, or the method according to any one of claims 10 to 18 is implemented.
